# EUROPEAN PATENT SPECIFICATION

(11) **EP 4 302 139 B1**
(45) Date of publication and mention of the grant of the patent: **18.02.2026**
(21) Application number: 22710437.9
(22) Date of filing: 23.02.2022
(51) Int. Cl.: G01T 1/164, G01T 1/20

(54) **SCINTIGRAPHIC MEASUREMENT DEVICE WITH EXTENDED AREA**
SZINTIGRAPHISCHE MESSVORRICHTUNG MIT ERWEITERTER FLÄCHE
DISPOSITIF DE MESURE SCINTIGRAPHIQUE À ZONE ÉTENDUE

(30) Priority: 01.03.2021 IT 202100004655
(43) Date of publication of application: 10.01.2024
(73) Proprietor: Consiglio Nazionale Delle Ricerche, 00185 Roma (IT)
(72) Inventor: SOLURI, Alessandro, 00185 Rome (IT); MASSARI, Roberto, 00048 Nettuno (RM) (IT)
(74) Representative: Bellomia, Paolo
(86) International application number: PCT/IB2022/051576
(87) International publication number: WO 2022/185147

(56) References cited:
- EP-A1- 1 262 796
- EP-A1- 3 399 345
- EP-A2- 0 917 656
- EP-B1- 0 917 656
- A. J. GONZALEZ ET AL: "Performance Study of a Wide-Area SiPM Array, ASICs Controlled", IEEE TRANSACTIONS ON NUCLEAR SCIENCE, vol. 62, no. 1, 1 February 2015 (2015-02-01), pages 19 - 26, XP055184736, ISSN: 0018-9499, DOI: 10.1109/TNS.2014.2359742

## Description

This invention relates to a scintigraphic measurement device with extended area, with a high degree of compactness and simplified electronics, in particular modular, with a high spatial resolution and able to form investigation areas of various shapes and sizes and therefore able to be used in different types of applications.

In general, the functional imaging systems used (SPECT and PET) are used in Nuclear Medicine as diagnostic devices and, in some cases, as localisation systems in the operating room and robotic surgery. The use of these devices may also be applied in the scintigraphic analysis of organs of small animals, so as to trial new radio-marked antibodies, which are specific for certain diseases. Moreover, there application can be planned in safety sectors (airports) or for industrial diagnostics.

The main use of these devices relates to the localisation of tumoral lesions, especially in those techniques which require an adequate spatial precision such as biopsies (prostate and breast) or in radioguided surgical operations or as a monitoring system in radiometabolic therapy, radioguided robot-assisted surgery and small animal imaging applications.

Currently, the devices such as traditional gamma chambers use a large number of phototubes connected together which are designed to read the charge produced in the interaction of the scintillation crystals with the photons coming from the emission source. In general, each phototube records a collected charge value and, consequently, this information is useful for determining the position of the interacting events (photon) in such a way as to form the scintigraphic image. Over the years several solutions have been introduced linked to the introduction of particular position-sensitive phototubes (PSPMT, "Position Sensitive Photo Multiplier Tube"), that is to say, which is able to calculate the position of the event directly on the same phototube, as an alternative to the simultaneous reading of the charge collected on the various phototubes.

The scintigraphic devices with high spatial resolution may use position-sensitive phototubes of the latest generation, that is to say, devices in which the number and size of the collection anodes may influence the intrinsic precision of the device in terms of spatial resolution which can be achieved. These devices highlight a high resolution power in the more central zones of the phototubes whilst this feature is not maintained close to the edges, due to a smaller collection of light due to the lack of sufficient anodes to complete the entire process for collecting the charge close to these zones. The physical dimensions of the device in general do not coincide with the collection area, therefore close to the edge zones the charge collection is incomplete caused by the loss of a portion of light due to the absence of more external collection anodes. The use of diffuser means (glass, quartz, etc.) is suitable for increasing the widening of the light which is produced in the crystal, since this method is effective in coupling several phototubes alongside each other, in order to better distribute it on several contiguous anodes, belonging to various phototubes and consequently perform the calculation of the charge barycentre to determine the position of the event.

The limitation of this technique consists in the actual dimensions of the phototube, which do not exactly correspond to the anode area, the latter being slightly smaller. This results in the presence of a dead zone of a few millimetres on each side when several phototubes are placed alongside each other and, consequently, the need to introduce the necessary measures which, in fact, do not allow satisfactory results to be obtained.

The considerations described up to complicate the development of extended areas by means of a high resolution measurement system based on PSPMT phototubes without intervening with processes which are able to provide good results even if affected by limitations regarding the spatial resolution values which can be obtained.

Moreover, the systems using PSPMT phototubes are penalised by the overall dimensions of the latter which, in the case of very large areas, require excessive spaces for their housing (or in any case incompatible with the modern miniaturisation requirements). As an alternative to the use of PSMPT, as for example disclosed in EP0917656B1 or in EP1262796A1, recent improvements have been obtained on optoelectronic devices such as APDs (Avalanche Photo Diode) or other types such as SiPMs (Silicon PhotoMultiplier), as for example disclosed in EP3399345A1 or in "Performance Study of a Wide-area SiPM array, ASICs controlled" by A. J. Gonzalez et al, and similar devices known as MPPC (Multi-Pixel Photon Counter). Compared with traditional PMT phototubes, they have numerous advantages such as, for example, the low operating voltage (from 30 to 80 V depending on the model and the manufacturer) and the insensitiveness to the magnetic field having been tested up to 4 T without any degradation of performance. Their main application limit is the statistical thermal noise (or "dark current", since it is also present in conditions of non-illumination of the SiPM), which is almost proportional to the active area. This currently places a clear limitation to the production of a single large device which uses a large number of SiPM (or MPPC modules) to create large measurement areas.

In effect, in order to obtain an excellent spatial resolution it is necessary to use a large number of SiPM or MPPC elements to cover entirely the measurement area; however, this results in an increase in the computational task of analysing the readings in the case of reading the individual elements.

Moreover, in the case of "mediated" readings, that is to say, readings of signals common to a certain number of SiPM or MPPC elements, there is the disadvantage of also adding up the dark currents which, upon reaching a certain number of elements (in the order of several hundreds), determine an overall reading comparable to the reading corresponding to a scintigraphic event (photon), making it impossible to distinguish between a scintigraphic event and a simple background noise amplified by the joining of a plurality of SiPM or MPPC elements connected in series.

Considering the above-mentioned prior art, the aim of the invention is to provide a scintigraphic measurement device which can be made with different geometries of the measurement area, and in particular which can be used for very large measurement areas.

Another aim of the invention is to provide a scintigraphic measurement device which is physically compact, and hence with small dimensions.

Another aim of the invention is to provide a scintigraphic measurement device which has a high spatial resolution.

The invention is set out in the appended set of claims.

Further features and advantages of the invention are more apparent in the nonlimiting description which follows of a non-exclusive embodiment of a scintigraphic measurement device according to the invention.

The description is set out below with reference to the accompanying drawings which are provided solely for purposes of illustration without restricting the scope of the invention and in which:
- Figure 1 shows a schematic transversal cross section of a measurement device according to a first embodiment of the invention;
- Figure 2 is an enlarged view of a detail of Figure 1;
- Figure 3 is an enlarged view of a detail of Figure 1 according to an alternative embodiment;
- Figure 4 is a schematic view of an optoelectronic network used in the device according to the invention and according to a first embodiment;
- Figure 5 is a schematic view of an optoelectronic network used in the device according to the invention and according to a second embodiment;
- Figure 6 shows the internal structure of a module of the optoelectronic network of Figure 4 or 5;
- Figure 7 shows the detail of a component of the module of Figure 6 according to a first embodiment;
- Figure 8 shows the detail of a component of the module of Figure 6 according to a second embodiment;
- figure 9 shows a schematic transversal cross section of a measurement device according to a second embodiment of the invention;
- Figure 10 is an enlarged view of a detail of Figure 9;
- Figure 11 shows a particular embodiment of a scintillation crystal which can be used in the device according to the invention.

With reference to the accompanying drawings, the numeral 1 schematically denotes a scintigraphic measurement device according to the invention.

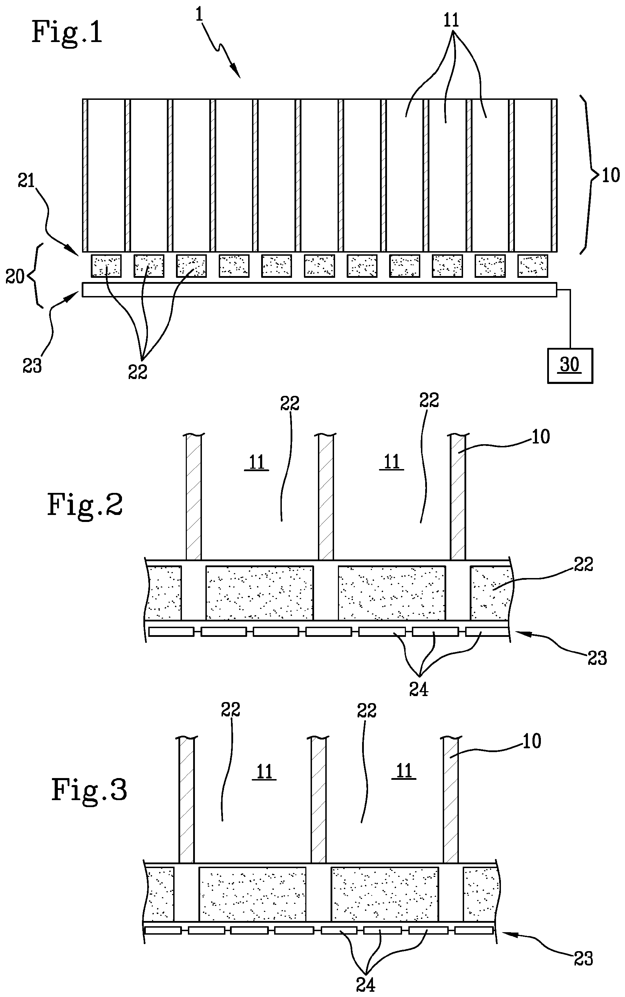

The device basically comprises, as shown in Figure 1:
- a collimator 10;
- a measurement structure 20, associated with the collimator 10 and positioned below it to define a measurement area; and
- an electronic processing unit 30 connected to the measurement structure 20.
- a collimator 10 made of a material with a high atomic number and having a plurality of collimation channels 11 distributed over said measurement area for absorbing a lateral radiation directed towards the measurement structure 20 and having an angle of incidence greater than a predetermined value.

The collimator 10 may be made in a traditional manner and will not be described further in the prior art aspects.

With reference to the measurement structure 20, it has a surface extension such as to define an overall measurement area, which is preferably substantially equal to the area of extension of the collimator 10.

The measurement structure 20 is configured to receive a radiation passing through the collimator 10 and to convert the radiation into electrical signals.

In more detail, the measurement structure 20 comprises a matrix 21 of scintillation crystals 22, defining in conjunction with each other the above-mentioned overall measurement area and configured for converting the radiation into photons, and an optoelectronic network 23 for converting photons into electrical signals.

The scintillation crystals are made in known manner, for example in CsI(Tl) or NaI(Tl). Moreover, the radiation is of the gamma type.

Preferably, each crystal 22 is associated uniquely with a respective collimation channel 11. Moreover, each crystal may be partly or entirely housed in the respective collimation channel 11, where the expression "partly or entirely" means along the feed direction of the radiation (that is to say, along the direction of extension of the collimation channel 11).

With reference to the optoelectronic network 23, it is positioned below the crystals 22, in other words on the opposite side relative to the collimator 11. The electronic processing unit 30 is connected to the measurement structure 20 and in particular to the optoelectronic network 23 for processing the electrical signals generated by it.

This invention relates mainly to the structure of the optoelectronic network 23.

In particular, according to the invention, the optoelectronic network 23 is defined by a matrix of optoelectronic conversion modules 24 connected to each other according to a two-dimensional distribution to cover the above-mentioned total measurement area, wherein the number of modules for each of the two dimensions is determined as a function of the extension of the overall measurement area.

Preferably, the above-mentioned matrix has the optoelectronic conversion modules 24 positioned along two (or more) directions which are transversal or perpendicular to each other to define an MxN distribution (M rows and N columns), where M and N are whole numbers selected each time as a function of the total measurement area.

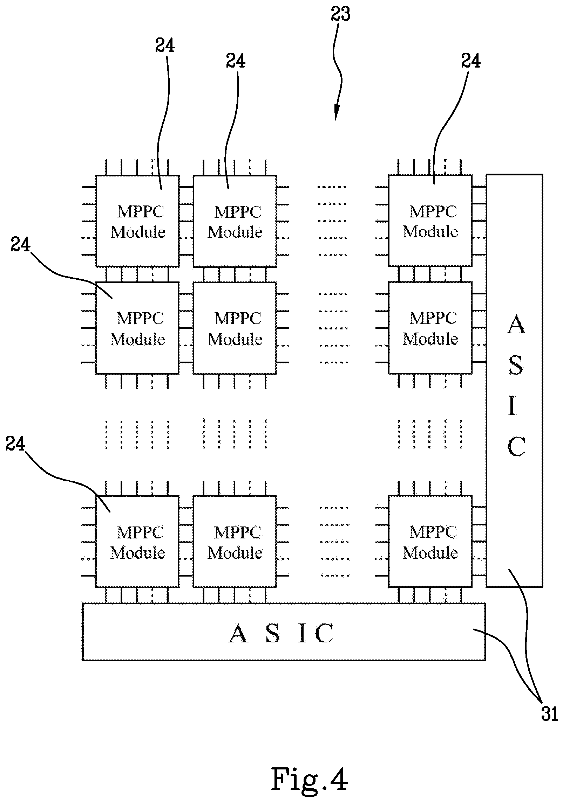

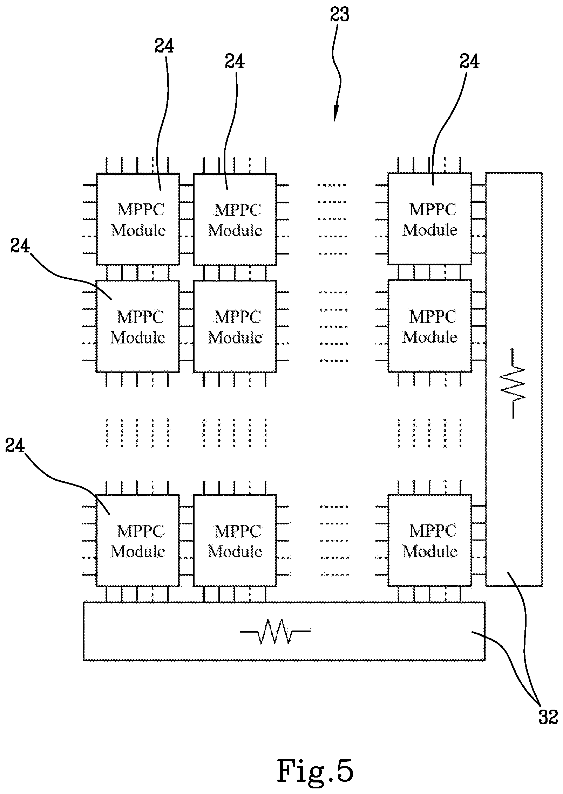

Figures 4 and 5 show two embodiments of the optoelectronic network 23, which differ in that they are connected, respectively, to a reading network of the ASIC type 31 and to a resistive network 32, forming part of the electronic processing unit 30 according to two different embodiments.

In accordance with an aspect of the invention, each optoelectronic conversion module 24 comprises a two-dimensional matrix of individual "Multi Pixel Photon Counter" (MPPC) elements or individual "Silicon PhotoMultiplier" (SiPM) elements, labelled "40" in the drawings, electrically interconnected and preferably integrated in a single component provided with a plurality of electrical connections 41 (or connection terminals). Each individual module 24 is shown as a "MPPC module" in the accompanying drawings.

As shown in Figures 4 to 6, each optoelectronic conversion module 24 comprises a plurality of electrical connections 41 along two directions which are transversal to each other, preferably perpendicular, and positioned on pairs of opposite sides. According to the specific embodiment illustrated, wherein the optoelectronic conversion modules 24 have a rectangular or square shape, the electrical connections of each module 24 are positioned along rows and columns and preferably positioned on the pairs of opposite sides. The number of electrical connections 41 is preferably identical in both the above-mentioned two directions. According to embodiments not illustrated, the modules 24 may have a non-rectangular or square shape but generically polygonal and have two or more pairs of opposite sides.

Inside the optoelectronic network 23 the pairs of opposite electrical connections of the modules 24 of each row or column define (or belong to) respective reading channels positioned, respectively, along a row or a column. In other words, inside the optoelectronic network 23 the modules 24 of a same row (or of a same column) are electrically connected to each other in series in such a way that the respective electrical connections of each row (or column) define respective cumulative reading channels in which the reading currents generated are added. In that way, the electronic processing unit 30 reads the electric currents supplied to each channel by the modules 24 connected to the channel along the respective row or column. In other words, the electronic processing unit 30 measures the total electric current of each channel delivered by the optoelectronic conversion modules 24 positioned on the channel.

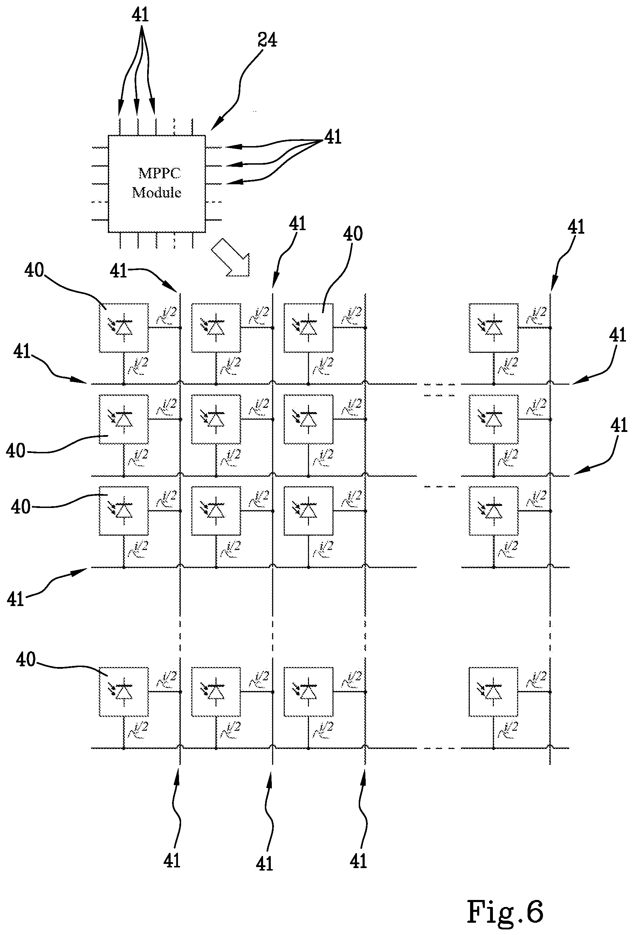

As shown in Figure 6, each MPPC or SiPM element 40 of each optoelectronic conversion module 24 is electrically connected to a single channel of the optoelectronic conversion module 24 for each of the two directions. In other words, each MPPC or SiPM 40 element is connected to a row channel and to a column channel, and each channel (row or column) of the optoelectronic conversion module 24 is connected to a plurality of MPPC or SiPM elements 40 belonging to the same channel, in which they deliver the relative electric current if a photon is received.

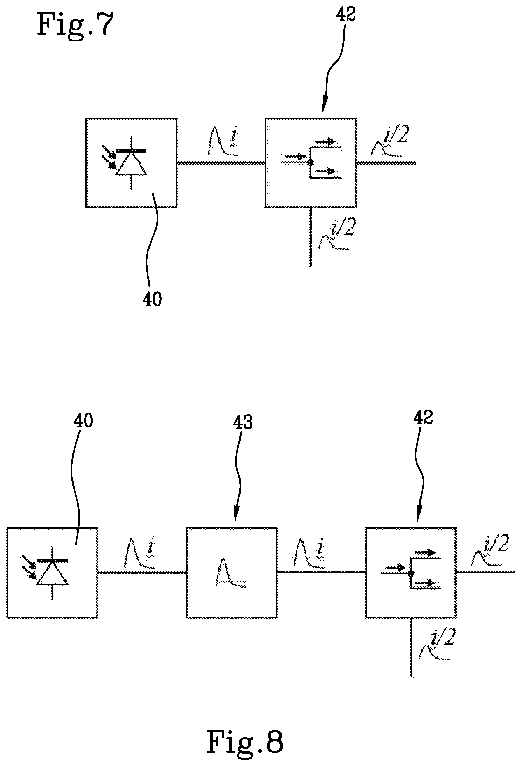

Figures 7 and 8 show in detail the electrical connections of each MPPC or SiPM element 40. As shown in Figure 7, each MPPC or SiPM 40 element delivers a respective current of intensity "i" in the case of receiving a photon and the current "i" is divided into two half-currents of intensity "i/2" supplied in the two row and column channels associated with the MPPC or SiPM 40 element.

Preferably, as shown in Figure 7, each MPPC or SiPM element 40 is associated with a respective current dividing element 42 configured to divide the current delivered by the MPPC or SiPM element 40 into the above-mentioned two half-currents.

Further, according to an aspect of the invention, each MPPC or SiPM element 40 is associated with a respective high-pass filter 43 (Figure 8) configured to eliminate current signals having an intensity less than a predetermined threshold. This threshold is preferably defined by a value of electric current less than 100 mA and preferably between 100 µA and 100 mA or alternatively between 1 µA and 1 mA, in such a way as to prevent the dark current of the MPPC or SiPM element 40 from being blocked from reaching the two channels associated with the MPPC or SiPM element 40, leaving in any case the currents connected to scintillation events.

According to an embodiment not illustrated, each MPPC or SiPM element 40 is associated with a respective high-pass filter 43 in the absence of a corresponding current dividing element 42.

According to an embodiment, each optoelectronic conversion module 23 has a surface extension different from the surface extension of at least one scintillation crystal 22 to which it is associated and/or different from a sub-multiple of the latter. This solution is shown in Figure 2, where it should be noted that there is no correspondence between the surface of each crystal 22 and the surface of each optoelectronic conversion module 23 or a multiple of the surface of each optoelectronic conversion module 23. This is because the selection of the surface of each crystal 22 may be performed as a function of the requirements, in particular as a function of the spatial resolution of the collimator 10, without any restriction imposed by the optoelectronic network 23.

Consequently, the surface extension of each optoelectronic conversion module 23 is only partly superposed on the at least one scintillation crystal 22 to which it is associated, without, however, any systematic nature in their superposing, since the structure of the optoelectronic network 23 is independent of the matrix of crystals 22 to which it is associated.

According to an embodiment, illustrated in Figure 3, the surface of each crystal 22 is a multiple of the surface of each optoelectronic conversion module 23 (in this case, approximately three times in the direction of length). This solution is a specific case in which there is a correspondence between the dimensions of the crystals 22 and of the modules 24, whilst representing an exception and not a design rule.

Preferably, each optoelectronic conversion module 24 according to the invention is defined by a number of MPPC or SiPM elements distributed in rows and columns, for example between 2 and 16 for each row and 2 and 16 for each column, for example 16x16, wherein each MPPC or SiPM element has a surface area of between 1 and 6 mm² mm. Preferably, therefore, each optoelectronic conversion module 24 extends on a surface area of between 4 mm² and approximately 15 cm^{2.}

Further, preferably, the optoelectronic conversion modules 24 are identical to each other and/or have a same number and a same distribution of single MPPC or SiPM elements 40.

Preferably, the invention is applicable to measurement devices wherein the overall measurement area is greater than 25 cm².

From the dimensional extension of each optoelectronic conversion module 24 it is therefore also possible that a single optoelectronic conversion module 24 is associated with two or more collimation channels and/or covers a measurement area corresponding to a 2x2 matrix of collimating channels, or greater.

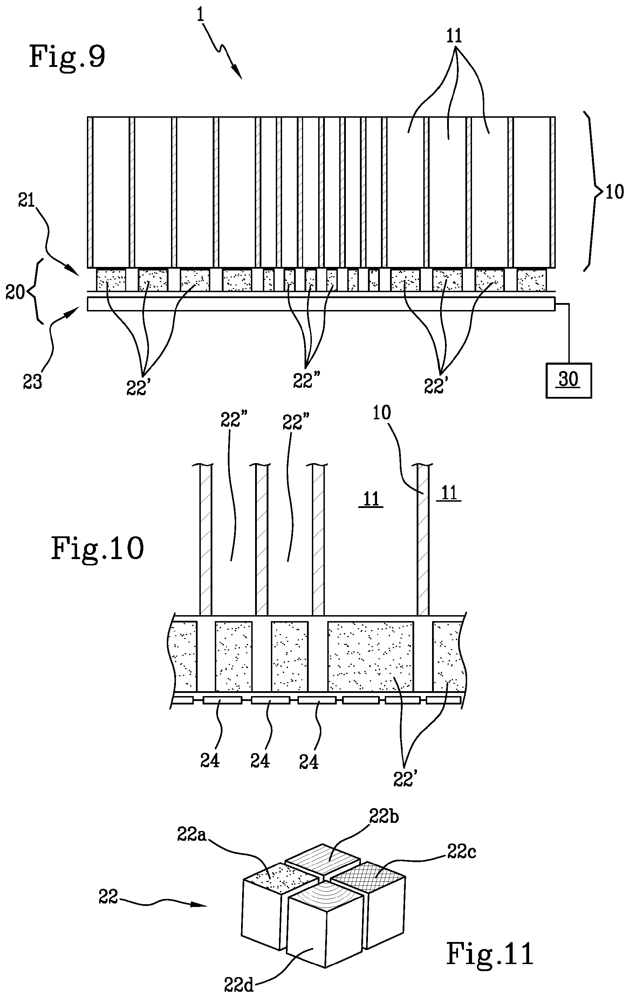

Figures 9 and 10 shown an embodiment wherein the total measurement area comprises a first portion defined by a plurality of first scintillation crystals 22' and a second portion defined by a plurality of second scintillation crystals 22", wherein each first scintillation crystal 22' has a respective measurement area different from the measurement area defined by each second scintillation crystal 22". In other words, a portion (in this case central) of the measurement area is associated with collimation channels 11 and with corresponding crystals 22" having an area less than the remaining part of the measurement area, so as to operate a localised zone with a greater spatial resolution. This embodiment can be operated without modifying the underlying optoelectronic network 23 which may therefore remain unaltered, not requiring correspondence between the surface areas of the crystals 22 and the surface areas of the optoelectronic conversion modules 24 (the latter may be kept with constant dimensions for the entire surface extension of the optoelectronic network 23).

Figure 11 shows an alternative embodiment for the local improvement of the spatial resolution, by making one or more crystals 22 in the embodiment illustrated, in particular by making up the crystal with a 2x2 matrix of sub-crystals 22a-22d having different scintillation properties (made of different materials), in particular different response times (photons emission times). In this situation, the position of the event for generating the photon on the crystal may be determined by measuring the instant of conversion of the photon into an electrical signal, thus determining from which of the four sub-crystals 22a-22d the photon has been generated. This embodiment of the crystals 22 may be applied for one or more of the component crystals of the measurement structure 20 and/or may be made with a different subdivision into sub-crystals, for example 3x3 or others. This embodiment of the crystals 22 may also be applicable to scintigraphic measurement devices having a traditional structure.

According to the invention it is therefore possible, once a plurality of scintillation crystals 22 have been prepared, defining, or designed to define, in conjunction with each other a total measurement area, to establish a type of optoelectronic conversion module 24 to be used (therefore, the surface extension of the module 24) and therefore determine the number of optoelectronic conversion modules 24 to be used and their two-dimensional distribution to cover entirely the measurement area.

The optoelectronic conversion modules 24 are then connected to each other in a two-dimensional configuration in such a way as to completely cover the measurement area and define the above-mentioned electrical channels (rows/columns) and applied to the plurality of scintillation crystals 22.

This invention achieves the preset aims and overcomes the above-mentioned drawbacks of the prior art.

The modular embodiment of the optoelectronic network, with reading by rows and columns, allows a considerable flexibility of application of the invention regardless of the geometry and the extension of the measurement area to be covered. The measurement area can also be very extensive, since the computational task is reduced by the reading of the cumulative currents for each channel row/column. Moreover, the dark currents can be effectively eliminated by applying a high-pass filter to each MPPC/SiPM element in an integrated manner in the same module.

## Claims

1. A scintigraphic measurement device with extended area, comprising:
- a measurement structure (20) defining an overall measurement area and designed to receive a radiation and to convert said radiation into electrical signals, said measurement structure (20) comprising a matrix (21) of scintillation crystals (22) defining said measurement area and an optoelectronic network (23) for converting photons into electrical signals;
- a collimator (10) made of a material with a high atomic number and having a plurality of collimation channels (11) distributed over said measurement area, said collimator (10) being associated with the measurement structure (20) for absorbing a lateral radiation directed towards the measurement structure (20) and having an angle of incidence greater than a predetermined value;
- an electronic processing unit (30) applied to the measurement structure (20) to process the electrical signals generated by the measurement structure (20); **characterised in that**
the optoelectronic network (23) is formed by a matrix of optoelectronic conversion modules (24) connected to each other according to a two-dimensional distribution to cover said measurement area, each optoelectronic conversion module (24) comprising a two-dimensional matrix of individual "Multi Pixel Photon Counter" (MPPC) elements (40) or individual "Silicon PhotoMultiplier" (SiPM) elements electrically interconnected,
**and in that**
the optoelectronic conversion modules (24) are electrically connected to each other along two directions which are transversal to each other, preferably perpendicular, by a plurality of channels for each direction and the electronic processing unit (30) is connected to the optoelectronic network (23) for measuring a total electric current of each channel delivered by the optoelectronic conversion modules (24) positioned on said channel.

2. The device according to claim 1, wherein said optoelectronic conversion modules (24) are identical to each other and/or have a same number and a same distribution of single MPPC or SiPM elements (40).

3. The device according to claim 1 or 2, wherein each MPPC or SiPM element (40) of each optoelectronic conversion module (24) is electrically connected to a single channel of the optoelectronic conversion module (24) for each of said two directions.

4. The device according to any one of the preceding claims, wherein each MPPC or SiPM element (40) of each optoelectronic conversion module (24) is associated with a respective current dividing element (42) configured to divide the current delivered by the MPPC or SiPM element into two half-currents, each half-current being supplied to a respective channel for each of said two directions.

5. The device according to any one of the preceding claims, wherein each MPPC or SiPM element (40) of each optoelectronic conversion module (24) is associated with a respective high-pass filter (43) configured to eliminate current signals having an intensity less than a predetermined threshold, said threshold preferably being defined by an electrical current value of between 10 and 100 mA.

6. The device according to any one of the preceding claims, wherein each optoelectronic conversion module (24) has a surface extension different from the surface extension of at least one scintillation crystal (22) to which it is associated and/or a surface extension only partly superposed on said at least one scintillation crystal (22) to which it is associated.

7. The device according to any one of the preceding claims, wherein said electronic processing unit (30) comprises an ASIC unit (31) or a resistive network (32) connected to said channels for measuring said total electric current of each channel delivered by the optoelectronic conversion modules (24) positioned on said channel.

8. The device according to any one of the preceding claims, wherein each optoelectronic conversion module (24) has a measurement area of between 4 mm² and approximately 15 cm² and/or wherein said total measurement area is greater than 25 cm².

9. The device according to any one of the preceding claims, wherein said total measurement area comprises a first portion defined by a plurality of first scintillation crystals (22') and a second portion defined by a plurality of second scintillation crystals (22"), wherein each first scintillation crystal (22') has a respective measurement area different from the measurement area defined by each second scintillation crystal (22"); preferably said first portion and second portion of the measurement area being associated with optoelectronic conversion modules (24) of equal dimensions and preferably equal to each other.

10. The device according to any one of the preceding claims, wherein at least one of said collimation channels (11) is associated with two or more crystals (22a, 22b, 22c, 22d) having different response times, preferably with four crystals (22a, 22b, 22c, 22d) having response times different to each other and arranged according to a 2x2 distribution.

11. A method for making a measurement device according to any one of the preceding claims, comprising the following steps:
- preparing a plurality of scintillation crystals (22) defining, or designed to define, in conjunction with each other a total measurement area;
- establishing a type of optoelectronic conversion module (24) to be used;
- determining the number of optoelectronic conversion modules (24) to be used to completely cover said measurement area;
- connecting together said optoelectronic conversion modules (24) in a two-dimensional configuration defining an optoelectronic network (23) covering entirely said measurement area;
- applying said optoelectronic network (23) to said plurality of scintillation crystals (22).

## Patentansprüche

1. Szintigraphische Messvorrichtung mit erweiterter Fläche, umfassend:
- eine Messstruktur (20), die eine Gesamtmessfläche definiert und dazu ausgestaltet ist, eine Strahlung zu empfangen und die Strahlung in elektrische Signale umzuwandeln, wobei die Messstruktur (20) eine Matrix (21) aus Szintillationskristallen (22), die die Messfläche definieren, und ein optoelektronisches Netzwerk (23) zum Umwandeln von Photonen in elektrische Signale umfasst;
- einen Kollimator (10), der aus einem Material mit einer hohen Ordnungszahl hergestellt ist und eine Vielzahl von Kollimationskanälen (11) aufweist, die über die Messfläche verteilt sind, wobei der Kollimator (10) mit der Messstruktur (20) assoziiert ist, um eine laterale Strahlung zu absorbieren, die auf die Messstruktur (20) gerichtet ist und einen Einfallswinkel aufweist, der größer als ein vorbestimmter Wert ist;
- eine elektronische Verarbeitungseinheit (30), die auf die Messstruktur (20) angewendet wird, um die von der Messstruktur (20) erzeugten elektrischen Signale zu verarbeiten;
**dadurch gekennzeichnet, dass**
das optoelektronische Netzwerk (23) durch eine Matrix von optoelektronischen Umwandlungsmodulen (24) gebildet ist, die gemäß einer zweidimensionalen Verteilung miteinander verbunden sind, um die Messfläche abzudecken, wobei ein jedes optoelektronische Umwandlungsmodul (24) eine zweidimensionale Matrix von einzelnen "Multi Pixel Photon Counter" (MPPC) -Elementen (40) oder einzelnen "Silicon PhotoMultiplier" (SiPM) - Elementen umfasst, die elektrisch miteinander verbunden sind,
und dadurch, dass
die optoelektronischen Umwandlungsmodule (24) durch eine Vielzahl von Kanälen für eine jede Richtung entlang zweier Richtungen elektrisch miteinander verbunden sind, die quer zueinander, vorzugsweise senkrecht, verlaufen, und die elektronische Verarbeitungseinheit (30) mit dem optoelektronischen Netzwerk (23) verbunden ist, um einen elektrischen Gesamtstrom eines jeden Kanals zu messen, der von den optoelektronischen Umwandlungsmodulen (24) geliefert wird, die auf dem Kanal positioniert sind.

2. Vorrichtung nach Anspruch 1, wobei die optoelektronischen Umwandlungsmodule (24) untereinander identisch sind und/oder eine gleiche Anzahl und eine gleiche Verteilung einzelner MPPC- oder SiPM-Elemente (40) aufweisen.

3. Vorrichtung nach Anspruch 1 oder 2, wobei ein jedes MPPC- oder SiPM-Element (40) eines jeden optoelektronischen Umwandlungsmoduls (24) für eine jede der zwei Richtungen elektrisch mit einem einzelnen Kanal des optoelektronischen Umwandlungsmoduls (24) verbunden ist.

4. Vorrichtung nach einem der vorhergehenden Ansprüche, wobei mit einem jeden MPPC- oder SiPM-Element (40) eines jeden optoelektronischen Umwandlungsmoduls (24) ein jeweiliges Stromteilungselement (42) assoziiert ist, das dazu ausgelegt ist, den von dem MPPC- oder SiPM-Element gelieferten Strom in zwei Halbströme aufzuteilen, wobei ein jeder Halbstrom einem jeweiligen Kanal für eine jede der zwei Richtungen zugeführt wird.

5. Vorrichtung nach einem der vorhergehenden Ansprüche, wobei mit einem jeden MPPC- oder SiPM-Element (40) eines jeden optoelektronischen Umwandlungsmoduls (24) ein jeweiliges Hochpassfilter (43) assoziiert ist, das ausgelegt ist, um Stromsignale mit einer Intensität von weniger als einem vorbestimmten Schwellenwert zu eliminieren, wobei der Schwellenwert vorzugsweise durch einen elektrischen Stromwert zwischen 10 und 100 mA definiert ist.

6. Vorrichtung nach einem der vorhergehenden Ansprüche, wobei ein jedes optoelektronische Umwandlungsmodul (24) eine Oberflächenausdehnung, die sich von der Oberflächenausdehnung mindestens eines Szintillationskristalls (22) unterscheidet, mit dem es assoziiert ist, und/oder eine Oberflächenausdehnung aufweist, die dem mindestens einen Szintillationskristall (22), mit dem es assoziiert ist, nur teilweise überlagert ist.

7. Vorrichtung nach einem der vorhergehenden Ansprüche, wobei die elektronische Verarbeitungseinheit (30) eine ASIC-Einheit (31) oder ein Widerstandsnetzwerk (32) umfasst, die mit den Kanälen verbunden sind, um den elektrischen Gesamtstrom eines jeden Kanals zu messen, der von den optoelektronischen Umwandlungsmodulen (24) geliefert wird, die auf dem Kanal positioniert sind.

8. Vorrichtung nach einem der vorhergehenden Ansprüche, wobei ein jedes optoelektronische Umwandlungsmodul (24) eine Messfläche zwischen 4 mm² und etwa 15 cm² aufweist und/oder wobei die Gesamtmessfläche größer als 25 cm² ist.

9. Vorrichtung nach einem der vorhergehenden Ansprüche, wobei die Gesamtmessfläche einen ersten Abschnitt, der durch eine Vielzahl von ersten Szintillationskristallen (22') definiert ist, und einen zweiten Abschnitt, der durch eine Vielzahl von zweiten Szintillationskristallen (22") definiert ist, umfasst, wobei ein jeder erste Szintillationskristall (22') eine jeweilige Messfläche aufweist, die sich von der Messfläche unterscheidet, die durch einen jeden zweiten Szintillationskristall (22") definiert ist; wobei vorzugsweise der erste Abschnitt und der zweite Abschnitt der Messfläche mit optoelektronischen Umwandlungsmodulen (24) mit gleichen Abmessungen und vorzugsweise gleich zueinander assoziiert sind.

10. Vorrichtung nach einem der vorhergehenden Ansprüche, wobei mindestens einer der Kollimationskanäle (11) mit zwei oder mehr Kristallen (22a, 22b, 22c, 22d) mit unterschiedlichen Ansprechzeiten assoziiert ist, vorzugsweise mit vier Kristallen (22a, 22b, 22c, 22d) mit voneinander unterschiedlichen Ansprechzeiten, die gemäß einer 2x2-Verteilung angeordnet sind.

11. Verfahren zur Herstellung einer Messvorrichtung nach einem der vorhergehenden Ansprüche, umfassend die folgenden Schritte:
- Vorbereiten einer Vielzahl von Szintillationskristallen (22), die in Verbindung miteinander eine Gesamtmessfläche definieren oder dazu ausgestaltet sind, diese zu definieren;
- Festlegen eines Typs eines zu verwendenden optoelektronischen Umwandlungsmoduls (24);
- Bestimmen der Anzahl der optoelektronischen Umwandlungsmodule (24), die verwendet werden sollen, um die Messfläche vollständig abzudecken;
- Verbinden der optoelektronischen Umwandlungsmodule (24) in einer zweidimensionalen Auslegung, die ein optoelektronisches Netzwerk (23) definiert, das die Gesamtmessfläche abdeckt;
- Anwenden des optoelektronischen Netzwerks (23) auf die Vielzahl von Szintillationskristallen (22).

## Revendications

1. Dispositif de mesure scintigraphique à zone étendue, comprenant :
- une structure de mesure (20) définissant une zone de mesure globale et conçue pour recevoir un rayonnement et convertir ledit rayonnement en signaux électriques, ladite structure de mesure (20) comprenant une matrice (21) de cristaux de scintillation (22) définissant ladite zone de mesure et un réseau optoélectronique (23) pour convertir des photons en signaux électriques ;
- un collimateur (10) réalisé en un matériau à numéro atomique élevé et comportant une pluralité de canaux de collimation (11) répartis sur ladite zone de mesure, ledit collimateur (10) étant associé à la structure de mesure (20) pour absorber un rayonnement latéral dirigé vers la structure de mesure (20) et ayant un angle d'incidence supérieur à une valeur prédéterminée ;
- une unité de traitement électronique (30) appliquée à la structure de mesure (20) pour traiter les signaux électriques générés par la structure de mesure (20) ; **caractérisé en ce que**
le réseau optoélectronique (23) est formé par une matrice de modules de conversion optoélectroniques (24) connectés les uns aux autres selon une répartition bidimensionnelle pour couvrir ladite zone de mesure, chaque module de conversion optoélectronique (24) comprenant une matrice bidimensionnelle d'éléments individuels de compteur de photons multi-pixels (MPPC) (40) ou d'éléments individuels de photomultiplicateurs à silicium (SiPM) interconnectés électriquement,
et **en ce que**
les modules de conversion optoélectroniques (24) sont connectés électriquement les uns aux autres selon deux directions transversales l'une par rapport à l'autre, de préférence perpendiculaires, par une pluralité de canaux pour chaque direction, et l'unité de traitement électronique (30) est reliée au réseau optoélectronique (23) afin de mesurer un courant électrique total de chaque canal fourni par les modules de conversion optoélectroniques (24) positionnés sur ledit canal.

2. Dispositif selon la revendication 1, dans lequel lesdits modules de conversion optoélectroniques (24) sont identiques les uns aux autres et/ou ont un même nombre et une même répartition d'éléments individuels de MPPC ou SiPM (40).

3. Dispositif selon la revendication 1 ou 2, dans lequel chaque élément de MPPC ou SiPM (40) de chaque module de conversion optoélectronique (24) est connecté électriquement à un canal unique du module de conversion optoélectronique (24) pour chacune desdites deux directions.

4. Dispositif selon l'une quelconque des revendications précédentes, dans lequel chaque élément de MPPC ou SiPM (40) de chaque module de conversion optoélectronique (24) est associé à un élément de division de courant (42) respectif configuré pour diviser le courant délivré par l'élément de MPPC ou SiPM en deux demi-courants, chaque demi-courant étant fourni à un canal respectif pour chacune desdites deux directions.

5. Dispositif selon l'une quelconque des revendications précédentes, dans lequel chaque élément de MPPC ou SiPM (40) de chaque module de conversion optoélectronique (24) est associé à un filtre passe-haut (43) respectif configuré pour éliminer les signaux de courant ayant une intensité inférieure à un seuil prédéterminé, ledit seuil étant de préférence défini par une valeur de courant électrique comprise entre 10 et 100 mA.

6. Dispositif selon l'une quelconque des revendications précédentes, dans lequel chaque module de conversion optoélectronique (24) présente une extension de surface différente de l'extension de surface d'au moins un cristal de scintillation (22) auquel il est associé et/ou une extension de surface seulement partiellement superposée audit au moins un cristal de scintillation (22) auquel il est associé.

7. Dispositif selon l'une quelconque des revendications précédentes, dans lequel ladite unité de traitement électronique (30) comprend une unité ASIC (31) ou un réseau résistif (32) connecté auxdits canaux pour mesurer ledit courant électrique total de chaque canal délivré par les modules de conversion optoélectroniques (24) positionnés sur ledit canal.

8. Dispositif selon l'une quelconque des revendications précédentes, dans lequel chaque module de conversion optoélectronique (24) présente une surface de mesure comprise entre 4 mm² et environ 15 cm² et/ou dans lequel ladite zone de mesure totale est supérieure à 25 cm².

9. Dispositif selon l'une quelconque des revendications précédentes, dans lequel ladite zone de mesure totale comprend une première partie définie par une pluralité de premiers cristaux de scintillation (22') et une seconde partie définie par une pluralité de seconds cristaux de scintillation (22"), dans lequel chaque premier cristal de scintillation (22') présente une zone de mesure respective différente de la zone de mesure définie par chaque second cristal de scintillation (22") ; de préférence, ladite première partie et ladite seconde partie de la zone de mesure étant associées à des modules de conversion optoélectroniques (24) de dimensions égales et de préférence égales entre eux.

10. Dispositif selon l'une quelconque des revendications précédentes, dans lequel au moins l'un desdits canaux de collimation (11) est associé à deux ou plusieurs cristaux (22a, 22b, 22c, 22d) présentant des temps de réponse différents, de préférence à quatre cristaux (22a, 22b, 22c, 22d) ayant des temps de réponse différents les uns des autres et disposés selon une distribution 2 par 2.

11. Procédé de fabrication d'un dispositif de mesure selon l'une quelconque des revendications précédentes, comprenant les étapes suivantes :
- préparer une pluralité de cristaux de scintillation (22) définissant, ou conçus pour définir, conjointement les uns avec les autres, une zone de mesure totale ;
- établir un type de module de conversion optoélectronique (24) à utiliser ;
- déterminer le nombre de modules de conversion optoélectroniques (24) à utiliser pour couvrir complètement ladite zone de mesure ;
- connecter ensemble lesdits modules de conversion optoélectroniques (24) dans une configuration bidimensionnelle définissant un réseau optoélectronique (23) couvrant entièrement ladite zone de mesure ;
- appliquer ledit réseau optoélectronique (23) à ladite pluralité de cristaux de scintillation (22).
